# EUROPÄISCHE PATENTSCHRIFT

(11) **EP 1 079 391 B1**
(45) Veröffentlichungstag und Bekanntmachung des Hinweises auf die Patenterteilung: **27.10.2004**
(21) Anmeldenummer: 00117848.2
(22) Anmeldetag: 18.08.2000
(51) Int. Cl.: G11B 33/06, G11B 3/00, G11B 23/00, G11B 17/025

(54) **Tonträger für ein tonillustriertes Buch**
Sound carrier for book
Support sonore pour livre

(30) Priorität: 20.08.1999 DE 19939612
(43) Veröffentlichungstag der Anmeldung: 28.02.2001
(73) Patentinhaber: Döring, Viturin, 85366 Moosburg (DE)
(72) Erfinder: Döring, Viturin, 85366 Moosburg (DE)
(74) Vertreter: Behrens, Dieter, Dr.-Ing.

(56) Entgegenhaltungen:
- DE-A- 2 358 110
- DE-A- 2 701 719
- DE-A- 3 133 187
- FR-A- 1 185 057
- US-A- 3 883 146

## Beschreibung

Die Erfindung betrifft einen Tonträger insbesondere für ein tonillustriertes Buch oder anderes Druckwerk der ausgewählten Seiten des Buches oder dergleichen zuzuordnen ist. Der folienartige Tonträger kann in das Buch eingelegt, eingebunden oder eingeklebt sein. Er kann als gesonderter Tonträger auch formstabil mit einem Druckwerk verbunden sein. Weiter kann er als Doppelseite ausgebildet und in Katernen von Büchern eingebunden werden. Solche Tonträger haben jeweils auf ihrer Oberseite wenigstens eine spiralförmige Tonrille und mindestens zwei, meist aber vier, außerhalb der Tonrille, um diese herum, insbes. symmetrisch, zu deren Mittelachse angeordnete Justierdurchbrechungen, meist in Form von runden Löchern. Diese sind so groß, dass sie je ein Justierfuß eines aufsetzbaren Tonwiedergabegerätes mit geringem Spiel umschließen. Sie nehmen so das Tonwiedergabegerät form- bzw. lagestabil, also praktisch unverrückbar auf. Das Tonwiedergabegerät hat einen um eine Drehachse rotierbaren Tonabnehmer, der in die Spiralrille zum Abspielen des Tonträgers abgesenkt wird.

Außer den Justierdurchbrechungen können die Tonträger auch Einschaltsicherungselemente für ein lagerecht aufsetzbares Tonwiedergabegerät aufweisen, das mit auf seiner Unterseite vorgesehenen Einschaltsicherungselementen mit diesen in Wechselwirkung tritt, um ein Einschalten nur in korrekter Lage zu ermöglichen (Deutsche Patentschrift DE 31 33 187 C2).

Sogenannte tönende oder tonillustrierte Kinderbücher insbes. für Unterrichtszwecke z. B. Sprachlehrbücher, Reisebücher, Enzyklopädie und dergleichen mit solchen Tonträgern sind bekannt.

Beim Unterricht und insbes. beim Selbstunterricht kann so das bildlich Dargestellte oder das Geschriebene durch die in den Tonrillen enthaltene akustische Information von etwa 1 - 4 Minuten Länge ergänzt und vertieft werden.

Es hat sich gezeigt, dass Kinder oder auch ältere Menschen beim Justieren des Tonwiedergabegerätes, speziell bei dickeren Büchern mit dieser Art der Justierung nicht immer auf Anhieb die richtige Zuordnung vornehmen. Um das Problem der Zuordnung der Tonrille zum Text im Buch selbst und die Beeinträchtigung der Lesbarkeit zu vermeiden, ist es bekannt (deutsche Patentschrift DE 2358110 C2) die Tonrillen auf aufschwenkbaren halbstarren Buchseiten gesondert vorzusehen. Dies ist aber bei manchen Anordnungen, vor allem wenn das Buch groß ist, und daher viel Platz seitlich des Buches erforderlich ist, unbefriedigend. Auch wenn bei einem anderen eingangs genannten tonillustrierten gebundenen Buch mit eingebundenen Tonträgerfolien an sich eine ausreichende Fläche zur Verfügung steht, ist durch die notwendige Größe des Wiedergabegerätes die Sicht teilweise behindert, vor allem wenn das Buch dicker ist (deutsche Patentschrift DE 31 33 187 C2). Bei der geringen Toleranz der Füße -Bohrungen, passiert es manchmal, dass man mit den Justierfüßen das Tonwiedergabegerät über die Justierdurchbrechungen hinwegschiebt, so dass es eines mehrfachen Nachrückens bedarf, bis die richtige Zuordnung erzielt ist. Die Justierfüße passen mit vergleichsweise geringem Spiel in die Durchbrechungen, damit das Gerät genau konzentrisch zur Tonrille justiert wird. Eine ungenaue Justierung führt bei der Wiedergabe zu deutlichen Tonhöhenschwankungen. Das geschilderte Problem ist bei gebundenen Büchern speziell auf der der Bindung zugewandten Seite der Tonträger noch größer. Bei den üblicherweise durchsichtigen glasklaren Tonträgerfolien ist es auf einer weißen Buchseite wegen der Transparenz zusätzlich schwierig, die Justierdurchbrechungen zu finden.

Es ist zur Justierung auch bekannt (deutsche Offenlegungsschrift DE 27 01 719 A) eine V-förmige Vertiefung im Zentrum der Tonrille eines Folien-Tonträgers vorzusehen, der eine Dicke von 0,15 bis 0,38 mm hat. In den V-Grund bzw. -Scheitel des Tonträgers greift ein Zentrierstift des Tonwiedergabegeräts ein. Die Tiefe der Vertiefung beträgt bis 0,127 mm. Am Rande der Vertiefungen können zusätzlich etwa 0,127 mm hohe Wülste vorgesehen sein, um die Führung des Zentrierstifts zum Grund der V-Vertiefung und das Halten in dieser Stellung zu erleichtern. Diese Zentrierung hat sich nicht bewährt, weil das Tonwiedergabegerät ständig in dieser Stellung festgehalten werden muss, was insbesondere Kindern sehr schwer fällt. Wird es nicht festgehalten, wird beim Anstoßen oder Wackeln oder einer anderen Bewegung die Zentrierlage verlassen. Dies ist deshalb der Fall, weil der Zentrierstift nur zum Scheitel der V-Vertiefung, aber nicht in einer anderen Richtung fixiert wird, wie das bei den eingangs genannten Tonträgern der Fall ist, bei denen runde Durchbrechungen vorgesehen sind, in die die Füße des Tonwiedergabegeräts mit nur geringem Spiel passen. Außerdem verdeckt das Tonwiedergabegerät jegliche Sicht zur V-förmigen Vertiefung des Folien-Tonträgers.

Ähnlich unzuverlässig ist die Zentrierung bei einem anderen bekannten System aus folienartigem Tonträger mit aufsetzbarem Tonwiedergabegerät, wie es in der US-Patentschrift 3,883,146 beschrieben ist. Das Tonwiedergabegerät hat zwei Zentrierstifte in Abstand von z. B. 20 mm voneinander. Bei einer ersten Ausführungsform sind diese an eine Seitenfläche von je einem Wulst zur Anlage zu bringen. Die Wülste sind nicht parallel, sondern stehen trichterförmig zueinander geneigt. Bei einer zweiten Ausführungsform sind zwei gekrümmte Langlöcher mit einer Verbreiterung in der Mitte vorgesehen, mit denen die beiden Zentrierstifte zum Eingriff zu bringen sind. Durch Drehung des Tonwiedergabegeräts kommen die beiden in die Langlöcher eingeführten Stifte einseitig zur Anlage an einem Grund bzw. Scheitel der Langlöcher. Auch hier müssen die Zentrierstifte in Anlage an den Wülsten oder Langlöchern gehalten werden, da die Zentrierstifte nicht gegen Bewegung in beliebige Richtung in der Ebene des Tonträgers durch den Tonträger formschlüssig lagestabil gehalten sind.

Der Erfindung liegt das Problem zugrunde, das lagegenaue Aufsetzen des Tonwiedergabegerätes in die eingangs genannten Justierdurchbrechungen eines folienartigen Tonträgers mit einer Dicke von etwa 0,2 bis 0,35 mm zu erleichtern und die Justierfüße des Tonwiedergabegeräts in diesen Justierdurchbrechungen so zu halten, dass das Tonwiedergabegerät nach der Zentrierung in der Ebene des Tonträgers in allen Richtungen sicher lagestabil gehalten ist.

Zur Lösung dieses Problems sieht die Erfindung vor, dass bei dem eingangs genannten Tonträger wenigstens eine der Justierdurchbrechungen auf der Oberseite des Tonträgers von einem nach oben aus der Oberseite vorstehenden Wulstring, der z. B. eingeprägt oder tiefgezogen ist, umgeben ist. Dieser Wulstring kann sich unmittelbar an die Durchbrechung anschließen oder er lässt einen geringen Abstand von etwa 1,0 bis 1,5 mm, insbesondere 1,2 mm, und bildet so einen flachen Absatz, was zur Präzisierung der Durchbrechung beiträgt. Der Wulstring sollte eine Höhe von 0,2 bis 0,3 mm, insbesondere von 0,2 mm, und eine Breite von ca. 1 - 1,5 mm, insbesondere 1,2 mm haben.

Zweckmäßigerweise werden zwei Durchbrüche am unteren Rand des Tonträgers mit diesem Wulstring ausgestattet. Durch diesen Wulstring sind die Durchbrüche nicht nur besser sichtbar, sie erleichtern auch das Justieren der Füße des Tonwiedergabegerätes, da die Justierfüße in dem größeren Wulstring praktisch hineinfallen und zwangsweise in die präzisen Justierdurchbrechungen schlüpfen. Man kann diese von einem Wulstring umgebenen Durchbrüche praktisch mit einem Trichter vergleichen.

Selbstverständlich können auch alle Durchbrechungen eines Tonträgers mit Wulsten versehen werden. Diese Wülste verhindern auch das unbeabsichtigte Verrücken des Tonwiedergabegerätes bei evtl. gewollten Unterbrechungen der Wiedergabe beim Studium von Lerntexten. Das ist wichtig, weil das Tonwiedergabegerät auch während der Wiedergabe häufig, beispielsweise für Unterbrechungen oder Wiedergabewiederholungen zu betätigen ist und dabei an sich die Gefahr des Verrückens besteht.

Alternativ zu dieser Lösung kann auch ein Teil der Justierdurchbrechungen, z. B. zwei untere Justierdurchbrechungen, in Richtung von den anderen Justierdurchbrechungen nach außen weg oder zu diesen nach innen hin verbreitert und verlängert ausgebildet sein und den in sie einzuführenden Justierfuß mit dem so geschaffenen breiten Bereich mit großem Spiel so umschließen, dass dieser Justierfuß zur Anlage an den engen Bereich verschieblich ist und die anderen Justierfüße in dieser Lage in die anderen Justierdurchbrechungen, die die Justierfüße im engsten Bereich mit geringem Spiel umschließen, einzugreifen vermögen. So ist ein ebener Führungstrichter gebildet, der das aufgesetzte Tonwiedergabegerät in die runden Durchbrechungen des Tonträgers leitet. Zusammen mit den dann zum Eingriff kommenden anderen Justierfüßen ist das Tonwiedergabegerät dann lagestabil gehalten.

Ein älterer bekannter Vorschlag (US Patentschrift 4,298,967) ist von der Praxis als ungeeignet verworfen worden, der im Mittelpunkt der Tonrille eines folienartigen, dünnen Tonträgers eine schuhartige zur Mitte und nach unten sich verengende Vertiefung vorsah, in die ein zentraler Justierstift des Tonwiedergabegerätes bis zum Grund in die Justierstellung geführt wird, in diese aber wegen Fehlen der Arretierungsmöglichkeit nicht lagestabil festgehalten ist. Außerdem verdeckt das Tonwiedergabegerät jegliche Sicht zur schuhartigen Vertiefung.

Die Wände der vergrößerten Justierdurchbrechungen sollten auf der den anderen Justierdurchbrechungen zugewandten oder abgewandten Seite die gleiche Gestalt haben wie die einzusetzenden Justierfüße. Dadurch befinden sich die Füße lagestabil in der zentrierten Lage jeweils an den genau definierten Positionen, an denen sie sich auch dann befänden, wenn alle Durchbrechungen, wie bekannt, kreisrund wären. Die nicht vergrößerten Justierdurchbrechungen sollten den üblichen Durchmesser, also einen von etwa 5 - 6 mm haben. Die vergrößerten Durchbrechungen haben etwa zu knapp der Hälfte die gleiche Gestalt, von wo sie sich verbreitern und verlängern auf eine größte Querabmessung von etwa 9 - 10 mm. Die Justierdurchbrechungen sind zur Unterseite des Tonträgers offen. An sich genügen für die Justierung zwei Justierdurchbrechungen, von denen eine rund und die andere trichterförmig ist. Dennoch werden meist, wie bisher, vier Durchbrechungen vorgesehen, von denen dann zwei trichterförmig verbreitert sind.

Hinsichtlich der Anordnung ist es sinnvoll, bei in Büchern einzubindenden oder einzuklebenden Tonträgern oder sonstwie nahe der Bindung anzuordnenden Tonträgern die Wulste oder die vergrößerten Justierdurchbrechungen auf der der Bindung des Buchs abgewandten Seite der Tonrille anzuordnen, da dorthin die Sicht am besten und dort die Krümmung der Seiten am geringsten ist, so dass die Füße in den Durchbrechungen zum engsten Grund hin verschoben und das Tonwiedergabegerät dann durch die anderen Durchbrechungen abgeschwenkt und aufgesetzt werden kann.

Die Ausführung mit den sich verbreiternden Justierdurchbrechungen ist dann von Bedeutung, wenn die Tonträger durch Automaten in Druckwerke eingeklebt oder eingebunden werden, damit sie weder auf der Ober- noch auf der Unterseite eine Verdickung aufweisen und einen Stapel von Tonträgern nicht einseitig aufbauen. Der Verleger kann entscheiden, welche Art von Justierdurchbrechungen für sein Druckwerk die geeignetste ist.

Das Einführen des Tonwiedergabegerätes in die Justierdurchbrechungen ist weiter erleichtert und darüber hinaus das Aufsetzen auf die Vorderseite des Tonträgers sichergestellt, wenn der Tonträger gemäß einer weiteren Ausgestaltung auf seiner Rückseite eine höchstens teilweise lichtdurchlässige Beschichtung aufweist, wobei es sich um eine Farbbeschichtung oder eine Folienbeschichtung oder die Beschichtung aus einem eingefärbten Klebstoff handeln kann. Als Folien haben sich auch faltenlos aufgewalzte Aluminiumfolien bewährt. Der Tonträger erhält dadurch ein den bekannten Kompakt-Disks (CDs) sehr ähnliches Aussehen. Derart beschichtete, gegebenenfalls unterschiedlich farbige Tonträger haben in Büchern den zusätzlichen Vorteil, dass sie leichter erkennbar und auch bestimmten Bereichen oder Themen zugeordnet sein können.

Zur Befestigung sind die einzelnen Tonträger, die vom Benutzer wahlfrei auf die vorgesehenen Stellen des Buchs eingeklebt werden können, mit einer Klebstoffbeschichtung versehen, die ihrerseits mit einer Abziehfolie geschützt ist. Einzelne Tonträger werden speziell für Kinderbücher verwendet oder für erklärungsbedürftige Texte. Damit Verlage nicht zweierlei Bücher drucken müssen, werden die Tonträger mit den Büchern mitgeliefert, die der Kunde bestellt hat. Als weitere Alternative können die Tonträger auch postkartenförmig zum Einheften oder Einkleben in Zeitschriften ausgeführt und/oder kartenförmig mit doppelseitiger Prägung als Sammelobjekt ausgeführt sein.

Die Art der Befestigung der Folien in Büchern oder anderen Druckwerken, so auch Zeitschriften, hängt ausschließlich vom Verwendungszweck des Druckwerkes und der Tonträger ab. Tonträger in Postkartengröße können ganzflächig z. B. in Kinderbücher geklebt werden. Sie können aber auch, wenn sie mit einem Klebestreifen am Rand versehen sind, in Zeitschriften geklebt werden, wie dies schon mit Postkarten und Prospekten gemacht wird.

Ausführungsbeispiele der Erfindung sind anhand einer Zeichnung näher erläutert, in der zeigt:
- Fig. 1: einen Tonträger mit 4 Durchbrüchen, von denen die unteren beiden Durchbrüche mit einem umlaufenden Wulst versehen sind;
- Fig. 1.1: den Wulstring nach Fig. 1 im Schnitt und vergrößert, ohne einen Absatz innerhalb der Wulstöffnung;
- Fig. 2: einen Tonträger mit 4 Durchbrechungen, von denen die unteren beiden Durchbrechungen auf gegenüberliegenden Seiten mit je einem geraden, schräg verlaufenden Wulst versehen sind, die nach unten aufeinanderzu verlaufen und gemeinsam eine schrägen Führungstrichter bilden;
- Fig. 3: einen dem Tonträger nach Fig. 1 ähnlichen Tonträger, bei dem innerhalb der Wulstöffnung noch ein schmaler, nach innen etwa 1,2 mm vorstehender Absatz belassen wurde;
- Fig. 3.1.: den Wulstring nach Fig. 3 im Schnitt und vergrößert, mit einem ca. 1,20 mm breitem Absatz innerhalb der Wulstöffnung;
- Fig. 4: einen Tonträger mit 4 Durchbrüchen, von denen die unteren beiden Justierdurchbrechungen trichterförmig vergrößert sind.

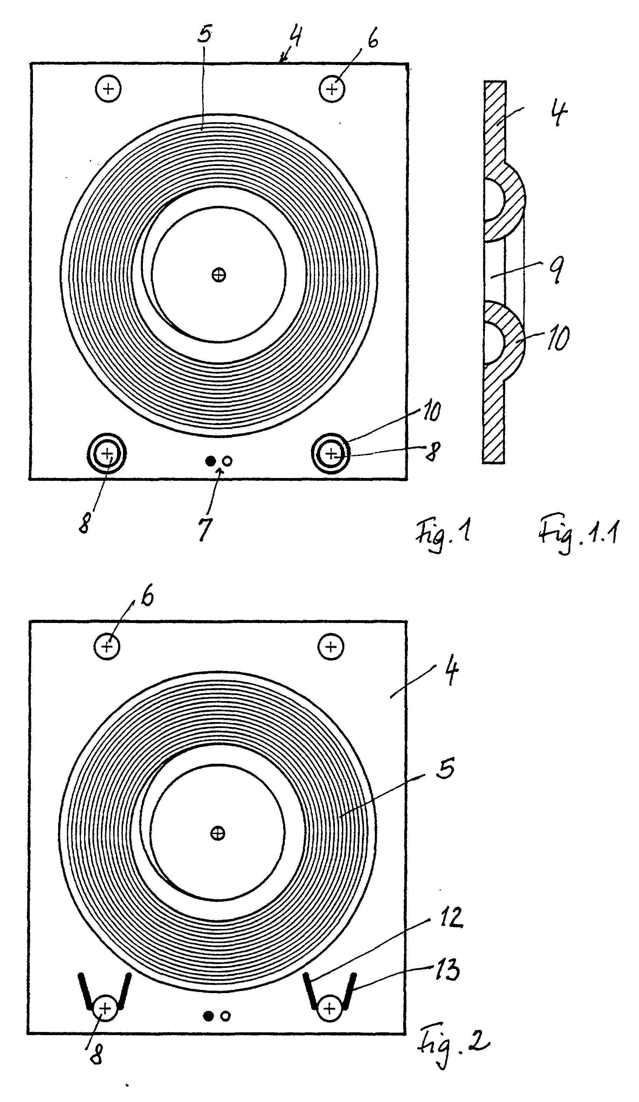

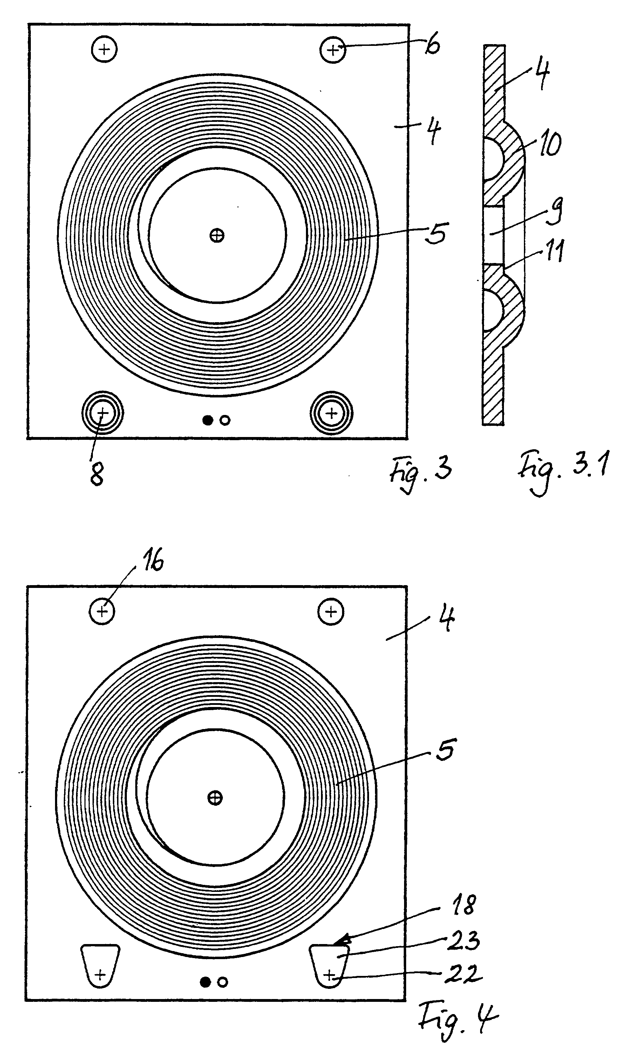

Ein in Fig. 1 dargestellter rechteckiger folienartiger Tonträger 4 mit einer Dicke von etwa 0,2 bis 0,35 mm aus einem durchsichtigen Kunststoffmaterial weist eine spiralförmige Tonrille 5 auf, die von einem kreisenden Tonabnehmer eines mit Justierfüßen aufsetzbaren Tonwiedergabegerät abtastbar ist. Der auf eine Buchseite zu klebende Tonträger hat auf seiner Rückseite z. B. eine druckaushärtende Klebstoffbeschichtung. Der Tonträger 4, dessen Umrisslinien sich aus Fig. 1 ergeben, weist gleichverteilt am Umfang meist in den Figuren oben zwei benachbarte übliche kreisrunde Justierdurchbrechungen 6 und unten zwei weitere benachbarte Justierdurchbrechungen 8 auf. Zwischen den unteren Justierdurchbrechungen können in bekannter Weise Einschaltsicherungselemente 7 in Form von nebeneinander angeordneten Ein- und Ausprägungen vorgesehen sein. Während die oberen Justierdurchbrechungen 6 nur kreisrund mit einem Durchmesser von 5 - 6 mm ausgebildet sind, sind die unteren Justierdurchbrechungen 8 von einem Wulstring 10 unmittelbar an die kreisrunde Justierdurchbrechung oder Wulstöffnung 9 anschließend umgeben, wie dies die Querschnittsdarstellung Fig. 1.1 zeigt.

Bei der Ausführungsform nach Fig. 2 sind statt eines die unteren Justierdurchbrechungen 8 umgebenden Wulstrings auf gegenüberliegenden Seiten schräg zueinander stehende geprägte und tiefgezogene Wulste 12 und 13 vorgesehen, die nach oben vorstehen und zusammen einen etwa an der Mittellinie endenden Trichter bilden. Dieser vermag beim Aufsetzen des Tonwiedergabegeräts dessen Justierfuß in die Durchbrechung zu leiten.

Die Ausführungsform nach Fig. 3 unterscheidet sich von der nach Fig. 1 nur dadurch, dass der Wulstring die Wulstöffnung 9 mit einem geringen Abstand von 1 bis 1,5 mm, vorzugsweise etwa 1,2 mm umschließt. Dadurch entsteht ein Absatz 11, der in der Querschnittsdarstellung der Fig. 3.1 deutlich erkennbar ist. Hierdurch ist die Ausbildung des Prägewerkzeugs für die Herstellung des Ringwulstes erleichtert und die Form der Öffnung exakter auszubilden.

Der Tonträger 4 nach Fig. 4 weist gleichverteilt am Umfang oben zwei übliche kreisrunde Justierdurchbrechungen 16 und unten zwei weitere benachbarte runde Justierdurchbrechungen 18 auf. Während die oberen Justierdurchbrechungen 16 nur kreisrund mit einem Durchmesser von 5 - 6 mm ausgebildet sind, sind die unteren Justierdurchbrechungen 18 trichterförmig ausgebildet und erweitern sich zu den oberen runden Durchbrechung hin bis zu einer größten Breite von etwa 9 - 10 mm. Ein enger Bereich 22, s. Fig. 4, ist ebenso gekrümmt wie die kreisrunden Durchbrechungen 16. Er befindet sich dort, wo sich die runden Justierfüße eines aufgesetzten Tonwiedergabegeräts befinden, wenn die runden Justierfüße in die runden Justierdurchbrechungen 16 eingreifen.

Beim Aufsetzen des Tonwiedergabegeräts werden die entsprechenden Justierfüße entweder in die Wulstringe 10 in den breiten Bereich 23 oder der Durchbrechung 18 eingesetzt und zum engen Bereich 12 zum Anschlag an den Öffnungsgrund verschoben, worauf das Tonwiedergabegerät zu den beiden kreisrunden oberen Durchbrechungen 6 bzw. 16 auf den Tonträger abgeschwenkt wird. Dabei sollten die beiden runden Justierfüße unmittelbar in die runden Justierdurchbrechungen eingreifen. Gegebenenfalls ist eine geringe Lagekorrektur nötig, die auch blind möglich ist.

Die runden Justierdurchbrechungen 6 bzw. 16 sind zweckmäßigerweise der Bindung des Buchs zugewandt und parallel zum Buchrücken vorgesehen, damit das Aufsetzen des Tonwiedergabegeräts in einem Bereich der Buchseite erfolgen kann, der üblicherweise nicht sehr stark gekrümmt ist. Würde das Gerät auf der Innenseite des Buchs, also nahe der Bindung aufgesetzt, könnte es durchaus möglich sein, dass die beiden anderen Füße nicht in die Justierdurchbrechungen eingreifen. Auf einer gegenüberliegenden Seite würden die Tonrillen mit den Justierdurchbrechungen spiegelbildlich angeordnet werden.

Es ist möglich, alle Tonträger mit den Justierdurchbrechungen auf einem Blatt in bekannter Weise (deutsche Patentschrift DE 31 33 187 C2) unterzubringen und dabei auch die Justierdurchbrechungen jeweils in gleicher Lage anzuordnen.

Wenn das Tonwiedergabegerät Einschaltsicherungselemente 7 aufweist, dann sind zwischen den unteren Justierdurchbrechungen 18 Einschaltsicherungsnoppen und -einprägungen in bekannter Weise vorgesehen.

Die trichterförmigen Justierdurchbrechungen 18 können gegenüber dem Tonträger auch um 180° um den Krümmungsmittelpunkt des engen Bereichs 22 gedreht ausgebildet sein. Ob das Tonwiedergabegerät auf die ersten Justierdurchbrechungen hin oder von diesen weg sich vergrößert und verlängert ist für das Aufsetzen nicht von erheblicher Bedeutung. In beiden Fällen ist das lagegenaue Aufsetzen des Tonwiedergabegeräts erleichtert. Die in Figuren 4 dargestellte Ausführungsform ist jedoch die bevorzugte.

Wie eingangs erläutert, können die Tonträger auf ihrer Rückseite farbig beschichtet und farbig ausgebildet sein, um aufgrund des Farbkontrasts zur Unterlage das genaue Aufsetzen zu erleichtern.

## Patentansprüche

1. Blattförmiger Tonträger, insbesondere mit einer Dicke von etwa 0,2 bis 0,35 mm und für ein tonillustriertes Buch, der ausgewählten Seiten zuzuordnen ist und der auf seiner Oberseite jeweils wenigstens eine spiralförmige Tonrille (5) aufweist und mindestens zwei außerhalb der Tonrille um diese herum, insbesondere symmetrisch zu deren Mittelachse angeordnete Justierdurchbrechungen (6, 8) hat, die so groß sind, daß sie je einen Justierfuß eines aufsetzbaren Tonwiedergabegeräts mit einem um eine Drehachse rotierbaren Tonabnehmer in einer Justierstellung lagestabil aufnehmen, in der die Mittelachse der Tonrille und die Drehachse des Tonabnehmers zusammenfallen,
**dadurch gekennzeichnet,**
**daß** wenigstens eine der Justierdurchbrechungen (8) auf der Oberseite des Tonträgers (4) von einem nach oben vorstehenden Wulstring (10) umgeben ist.

2. Tonträger nach Anspruch 1,
**dadurch gekennzeichnet,**
**daß** jeder Wulstring (10) die Justierdurchbrechung mit geringem Abstand von etwa 1-1,5 mm, insb. 1,2 mm, einen Absatz belassend, umgibt.

3. Blattförmiger Tonträger, insbesondere mit einer Dicke von etwa 0,2 bis 0,35 mm und für ein tonillustriertes Buch, der ausgewählten Seiten zuzuordnen ist und der auf seiner Oberseite jeweils wenigstens eine spiralförmige Tonrille (5) aufweist und mindestens zwei außerhalb der Tonrille um diese herum, insbesondere symmetrisch zu deren Mittelachse angeordnete Justierdurchbrechungen (6, 8) hat, die so groß sind, daß sie je einen Justierfuß eines aufsetzbaren Tonwiedergabegeräts mit einem um eine Drehachse rotierbaren Tonabnehmer in einer Justierstellung lagestabil aufnehmen, in der die Mittelachse der Tonrille und die Drehachse des Tonabnehmers zusammenfallen,
**dadurch gekennzeichnet,**
**daß** wenigstens eine der Justierdurchbrechungen (8) auf der Oberseite des Tonträgers (4) auf gegenüberliegenden Seiten schräg zueinander stehende gerade Wulste (12, 13) aufweist, die nach oben vorstehen und zusammen einen Trichter bilden, der den Justierfuß in die Justierdurchbrechung (8) zu leiten vermag.

4. Tonträger nach Anspruch 1 oder 3,
**dadurch gekennzeichnet,**
**daß** jeder Wulstring (10) oder gerade Wulst (12,13) über der Tonträger-Oberseite eine Höhe von etwa 0,2 to 0,3 mm und eine Breite von 1,0 bis 1,3 mm, hat.

5. Tonträger nach Anspruch 1 oder 3,
**dadurch gekennzeichnet,**
**daß** jeder Wulstring (10) oder gerade Wulst (12, 13) an allen Justierdurchbrechungen (8) vorgesehen ist.

6. Blattförmiger Tonträger, insbesondere mit einer Dicke von etwa 0,2 bis 0,35 mm und für ein tonillustriertes Buch, der ausgewählten Seiten zuzuordnen ist und der auf seiner Oberseite jeweils wenigstens eine spiralförmige Tonrille (5) aufweist und mindestens zwei außerhalb der Tonrille um diese herum, insbesondere symmetrisch zu deren Mittelachse angeordnete Justierdurchbrechungen (16, 18) hat, die so groß sind, daß sie je einen Justierfuß eines aufsetzbaren Tonwiedergabegeräts mit einem um eine Drehachse rotierbaren Tonabnehmer in einer Justierstellung lagestabil aufnehmen, in der die Mittelachse der Tonrille und die Drehachse des Tonabnehmers zusammenfallen,
**dadurch gekennzeichnet,**
**daß** wenigstens eine der Justierdurchbrechungen (18) in Richtung von den anderen Justierdurchbrechungen nach außen weg oder zu diesen hin verbreitert und verlängert ist und den in sie einzuführenden Justierfuß mit dem so geschaffenen breiten Bereich (23) mit großem Spiel umschließt, daß dieser Justierfuß zur Anlage an den engen Bereich (22)verschieblich ist und die anderen Justierfüße in dieser Lage in die anderen Justierdurchbrechungen (16), die die Justierfüße im engsten Bereich mit geringem Spiel umschließen, einzugreifen vermögen.

7. Tonträger nach Anspruch 6,
**dadurch gekennzeichnet,**
**daß** sich jede verbreiterte und verlängerte Justierdurchbrechung (8) vom breiten Bereich (13) zum engen Bereich (12) hin trichterförmig verjüngt.

8. Tonträger nach Anspruch 6 oder 7,
**dadurch gekennzeichnet,**
**daß** die Wände der verbreiterten und verlängerten Justierdurchbrechungen (18) auf der den anderen Justierdurchbrechungen (16) zugewandten oder abgewandten Seite die gleiche Gestalt haben wie die einzusetzenden Justierfüße.

9. Tonträger nach einem der Ansprüche 6 bis 8,
**dadurch gekennzeichnet,**
**daß** bei den verbreiterten und verlängerten Justierdurchbrechungen (18) der enge Bereich (22) einen Krümmungshalbmesser von etwa 2,5 bis 3 mm hat und der breite Bereich (23) etwa 9 bis 10 mm breit ist.

10. Tonträger nach einem der Ansprüche 3 bis 8,
**dadurch gekennzeichnet,**
**daß** bei in Büchern einzubindenden Tonträgern (4) oder nahe der Bindung anzuordnenden Tonträgern die Wulste (12, 13) oder die verbreiterten und verlängerten Justierdurchbrechungen (18) auf der der Bindung abgewandten Seite der Tonrille (5) angeordnet sind.

11. Tonträger, hergestellt aus glasklarem oder durchsichtigem Kunststoff, nach einem der Ansprüche 1 bis 10
**dadurch gekennzeichnet,**
**daß** der Tonträger (4) auf seiner Rückseite eine höchstens teilweise lichtdurchlässige Beschichtung aufweist.

12. Tonträger nach Anspruch 11,
**dadurch gekennzeichnet,**
**daß** die Beschichtung eine Farbbeschichtung ist.

13. Tonträger nach Anspruch 11,
**dadurch gekennzeichnet,**
**daß** die Beschichtung eine Folienbeschichtung ist.

14. Tonträger nach Anspruch 13,
**dadurch gekennzeichnet,**
**daß** die Folienbeschichtung eine Aluminium-Folie umfaßt.

15. Tonträger nach Anspruch 11,
**dadurch gekennzeichnet,**
**daß** die Beschichtung eine Schicht aus einem eingefärbten Klebstoff ist.

## Claims

1. A sheet-shaped sound carrier, especially having a thickness of about 0.2 to 0.35mm and for a sound-illustrated book, which sound carrier is to be associated with selected pages and has on its front side at least one spiral-shaped sound groove (5) and at least two adjustment perforations (6, 8) which are arranged outside of the sound groove area and around the same, especially symmetrically with respect to the centre axis thereof, and are dimensioned such that they each receive in a prealigned manner an aligning foot of a sound reproducing device, which is adapted to be placed thereon and has a pickup means rotatable about an axis of rotation, in an adjustment position in which the centre axis of the sound groove and the axis of rotation of the sound pickup means coincide,
**characterized in that**
at least one of the adjustment perforations (8) is surrounded by an upwardly projecting annular bead (10) on the surface of the sound carrier (4).

2. The sound carrier according to claim 1,
**characterized in that**
each annular bead (10) surrounds the adjustment perforation at a small distance of about 1 - 1.5mm, especially 1.2mm, leaving a shoulder between the perforation and the bead.

3. A sheet-shaped sound carrier, especially having a thickness of about 0.2 to 0.35mm and for a sound-illustrated book, which sound carrier is to be associated with selected pages and has on its front side at least one spiral-shaped sound groove (5) and at least two adjustment perforations (6, 8) which are arranged outside of the sound groove area and around the same, especially symmetrically with respect to the centre axis thereof, and are dimensioned such that they each receive in a prealigned manner an aligning foot of a sound reproducing device, which is adapted to be placed thereon and has a pickup means rotatable about an axis of rotation, in an adjustment position in which the centre axis of the sound groove and the axis of rotation of the sound pickup means coincide,
**characterized in that**
at least one of the adjustment perforations (8) of the sound carrier (4) is provided on its front side with straight beads (12, 13) which are arranged obliquely with respect to each other on opposite sides of each perforation, project in upward direction and together form a funnel that is adapted to lead the aligning foot into the adjustment perforation (8).

4. The sound carrier according to claim 1 or 3,
**characterized in that**
each annular bead (10) or straight bead (12, 13) has a height of about 0.2 to 0.3mm and a width of 1.0 to 1.3mm above the surface of the sound carrier.

5. The sound carrier according to claim 1 or 3,
**characterized in that**
each annular bead (10) or straight beads (12, 13) is provided on all the adjustment perforations (8).

6. A sheet-shaped sound carrier, especially having a thickness of about 0.2 to 0.35mm and for a sound-illustrated book, which sound carrier is to be associated with selected pages and has on its front side at least one spiral-shaped sound groove (5) and at least two adjustment perforations (6, 8) which are arranged outside of the sound groove area and around the same, especially symmetrically with respect to the centre axis thereof, and are dimensioned such that they each receive in a prealigned manner an aligning foot of a sound reproducing device, which is adapted to be placed thereon and has a pickup means rotatable about an axis of rotation, in an adjustment position in which the centre axis of the sound groove and the axis of rotation of the sound pickup means coincide
**characterized in that**
at least one of the adjustment perforations (18) is widened and extended in a direction away from the other adjustment perforations toward the outside or in the direction toward the same and surrounds the aligning foot to be inserted into it with the wide region (23) thus made with large clearance, so that said aligning foot is movable to abut the narrow region (22), and the other adjusting feet are in this position able to engage into the other adjustment openings (16) that enclose the adjusting feet in the narrowest region with small clearance.

7. The sound carrier according to claim 6,
**characterized in that**
each widened and extended adjustment perforation (8) is tapered in a funnel-like manner from the wide region (13) to the narrow region (12).

8. The sound carrier according to claim 6 or 7,
**characterized in that**
the walls of the widened and extended adjustment perforations (18) have on the side facing toward or away from the other adjustment perforation (16) the same configuration as the aligning feet to be inserted.

9. The sound carrier according to one of claims 6 to 8,
**characterized**
**in that** the narrow region (22) of the widened and extended adjustment perforations (18) has a radius of curvature of about 2.5 to 3mm and the wide region (23) has a width of about 9 to 10mm.

10. The sound carrier according to one of claims 3 to 8,
**characterized in that**
where the sound carriers (4) have to be bound into the books or arranged close to the binding, the beads (12, 13) or the widened and extended adjustment perforations (18) are arranged on the side of the sound groove (5) facing away from the binding.

11. The sound carrier manufactured from crystal-clear or translucent plastics material, according to one of claims 1 to 10,
**characterized in that**
the rear side of the sound carrier (4) is provided with a coating partially transparent at most.

12. The sound carrier according to claim 11,
**characterized in that**
the coating is a colour coating.

13. The sound carrier according to claim 11,
**characterized in that**
the coating is a film coating.

14. The sound carrier according to claim 13,
**characterized in that**
the film coating comprises an aluminium film.

15. The sound carrier according to claim 11,
**characterized in that**
the coating is a layer of a dyed adhesive.

## Revendications

1. Support sonore en forme de feuille, notamment d'une épaisseur de 0,2 à 0,35 mm environ, pour un livre illustré par son, qui est à associer à des pages sélectionnées et qui, sur sa face supérieure, présente respectivement au moins un sillon sonore (5) en forme de spirale ainsi qu'au moins deux passages d'ajustage (6, 8) disposés à l'extérieur du sillon sonore, autour de celui-ci, notamment de manière symétrique par rapport à l'axe central de celui-ci, qui sont suffisamment grands pour recevoir dans une position d'ajustage stable respectivement un pied d'ajustage d'un appareil de reproduction du son emboîtable comprenant une tête de lecture rotative autour d'un axe de rotation, position dans laquelle l'axe central du sillon sonore et l'axe de rotation de la tête de lecture coïncident, **caractérisé en ce qu'**au moins l'un des passages d'ajustage (8) sur la face supérieure du support sonore (4) est entouré par un boudin annulaire (10) saillant vers le haut.

2. Support sonore selon la revendication 1, **caractérisé en ce que** chaque boudin annulaire (10) entoure le passage d'ajustage à une faible distance de 1 - 1,5 mm environ, notamment de 1,2 mm, laissant un talon.

3. Support sonore en forme de feuille, notamment d'une épaisseur de 0,2 à 0,35 mm environ, pour un livre illustré par son, qui est à associer à des pages sélectionnées et qui, sur sa face supérieure, présente respectivement au moins un sillon sonore (5) en forme de spirale ainsi qu'au moins deux passages d'ajustage (6, 8) disposés à l'extérieur du sillon sonore, autour de celui-ci, notamment de manière symétrique par rapport à l'axe central de celui-ci, qui sont suffisamment grands pour recevoir dans une position d'ajustage stable respectivement un pied d'ajustage d'un appareil de reproduction du son emboîtable comprenant une tête de lecture rotative autour d'un axe de rotation, position dans laquelle l'axe central du sillon sonore et l'axe de rotation de la tête de lecture coïncident, **caractérisé en ce qu'**au moins l'un des passages d'ajustage (8) sur la face supérieure du support sonore (4) présente, sur des faces situées en regard l'une de l'autre, des boudins (12, 13) droits placés de manière inclinée l'un vers l'autre, qui saillent vers le haut et forment conjointement un pavillon qui est en mesure de guider le pied d'ajustage dans le passage d'ajustage (8).

4. Support sonore selon la revendication 1 ou 3, **caractérisé en ce que** chaque boudin annulaire (10) ou boudin droit (12, 13) présente, au-dessus de la face supérieure du support sonore, une hauteur de 0,2 à 0,3 mm environ et une largeur de 1,0 à 1,3 environ.

5. Support sonore selon la revendication 1 ou 3, **caractérisé en ce que** chaque boudin annulaire (10) ou boudin droit (12, 13) est prévu au niveau de tous les passages d'ajustage (8).

6. Support sonore en forme de feuille, notamment d'une épaisseur de 0,2 à 0,35 mm environ, pour un livre illustré par son, qui est à associer à des pages sélectionnées et qui, à sa face supérieure, présente respectivement au moins un sillon sonore (5) en forme de spirale ainsi qu'au moins deux passages d'ajustage (6, 8) disposés à l'extérieur du sillon sonore, autour de celui-ci, notamment de manière symétrique par rapport à l'axe central de celui-ci, qui sont suffisamment grands pour recevoir dans une position d'ajustage stable respectivement un pied d'ajustage d'un appareil de reproduction du son emboîtable comprenant une tête de lecture rotative autour d'un axe de rotation, position dans laquelle l'axe central du sillon sonore et l'axe de rotation de la tête de lecture coïncident, **caractérisé en ce qu'**au moins l'un des passages d'ajustage (8) est élargi et prolongé soit vers l'extérieur des autres passages d'ajustage ou en direction de ceux-ci et entoure le pied d'ajustage à introduire dans ceux-ci par la zone large (23) ainsi réalisée avec un jeu important, **en ce que** ce pied d'ajustage peut être déplacé pour s'appliquer contre la zone étroite (22) et que les autres pieds d'ajustage sont en mesure de s'introduire dans cette position dans les autres passages d'ajustage (16) qui entourent les pieds d'ajustage dans la zone la plus étroite avec un faible jeu.

7. Support sonore selon la revendication 6, **caractérisé en ce que** chaque passage d'ajustage (8) élargi et prolongé s'amincit en forme de pavillon depuis la zone large (13) vers la zone étroite (12).

8. Support sonore selon la revendication 6 ou 7, **caractérisé en ce que** les parois des passages d'ajustage (18) élargis et prolongés, sur la face en regard des autres passages d'ajustage (16) ou opposée à ceux-ci, présentent la même forme que les pieds d'ajustage à introduire.

9. Support sonore selon l'une quelconque des revendications 6 à 8, **caractérisé en ce que** pour les passages d'ajustage (18) élargis et prolongés la zone étroite (22) présente un rayon de courbure de 2,5 à 3 mm environ et la zone large (23) une largeur de 9 à 10 mm environ.

10. Support sonore selon l'une quelconque des revendications 3 à 8, **caractérisé en ce que** pour des supports sonores (4) à insérer dans des livres ou à disposer à proximité du liage, les boudins (12, 13) ou les passage d'ajustage (18) élargis et prolongés sont disposés sur la face du sillon sonore (5) opposée au liage.

11. Support sonore, réalisé à partir d'une matière plastique claire comme le verre ou transparente, selon l'une quelconque des revendications 1 à 10, **caractérisé en ce que** le support sonore (4), sur sa face arrière, présente un revêtement au maximum partiellement transparent.

12. Support sonore selon la revendication 11, **caractérisé en ce que** le revêtement est un revêtement par encre.

13. Support sonore selon la revendication 11, **caractérisé en ce que** le revêtement est un revêtement par film.

14. Support sonore selon la revendication 13, **caractérisé en ce que** le revêtement par film comprend un film en aluminium.

15. Support sonore selon la revendication 11, **caractérisé en ce que** le revêtement est une couche en colle teintée.
